(19) Europäisches Patentamt
European Patent Office
Office européen des brevets

(11) **EP 1 036 032 B1**

(12) **EUROPÄISCHE PATENTSCHRIFT**

(45) Veröffentlichungstag und Bekanntmachung des Hinweises auf die Patenterteilung:
**27.02.2002 Patentblatt 2002/09**

(21) Anmeldenummer: **98961249.4**

(22) Anmeldetag: **03.12.1998**

(51) Int Cl.$^7$: **C01B 3/58**, C10K 1/34

(86) Internationale Anmeldenummer:
**PCT/EP98/07868**

(87) Internationale Veröffentlichungsnummer:
**WO 99/29621 (17.06.1999 Gazette 1999/24)**

(54) **VORRICHTUNG ZUR SELEKTIVEN KATALYTISCHEN OXIDATION VON KOHLENMONOXID**

DEVICE FOR SELECTIVE CATALYTIC OXIDATION OF CARBON MONOXIDE

DISPOSITIF POUR L'OXYDATION CATALYTIQUE SELECTIVE DE MONOXYDE DE CARBONE

(84) Benannte Vertragsstaaten:
**DE FR GB IT**

(30) Priorität: **04.12.1997 DE 19753720**

(43) Veröffentlichungstag der Anmeldung:
**20.09.2000 Patentblatt 2000/38**

(73) Patentinhaber: **XCELLSIS GmbH**
**73230 Kirchheim / Teck-Nabern (DE)**

(72) Erfinder:
• **BRAUCHLE, Stefan**
  **D-88400 Biberach (DE)**
• **FREITAG, Oliver**
  **D-73230 Kirchheim (DE)**
• **STROBEL, Barbara**
  **D-89160 Dornstadt (DE)**
• **WOLFSTEINER, Matthias**
  **D-91793 Alesheim (DE)**

(74) Vertreter: **Kocher, Klaus-Peter Dipl.-Phys et al**
**Daimler-Benz Aktiengesellschaft Intellectual Property Management FTP-C 106**
**70546 Stuttgart (DE)**

(56) Entgegenhaltungen:
EP-A- 0 776 861        WO-A-97/25752
DE-A- 19 539 648      US-A- 5 015 444

**Beschreibung**

Die Erfindung betrifft eine Vorrichtung zur selektiven katalytischen Oxidation von Kohlenmonoxid in einem wasserstoffreichen Gasgemischstrom gemäß dem Oberbegriff des Patentanspruchs 1.

Eine Vorrichtung in Plattenbauweise, mit der der Kohlenmonoxidanteil im Produktgas eines Wasserdampfreformers verringert werden soll, ist aus der DE 195 44 895 C1 bekannt. Bei dieser Anordnung werden Platten mit Reaktionskammern und Wärmetauscherkammern abwechselnd aufeinandergestapelt. In jeder Platte sind jeweils 4 Durchtrittsöffnungen zur Zu- beziehungsweise Abfuhr des Gasgemischstromes beziehungsweise des Wärmeträgermediums vorgesehen. Um in jeder Stufe Luft mit unterschiedlichem Volumenstrom zuführen zu können, sind zusätzlich an den Stirnseiten der Platten mit den Reaktionskammern Bohrungen vorgesehen, durch die jeweils Luft in die Reaktionsräume zudosiert werden kann. Zur Verteilung der Luft sind jedoch zusätzliche Bauteile vorzusehen.

Weiterhin ist aus der DE 87 09 386 U1 eine Vorrichtung zum Beaufschlagen eines gasdurchströmten Reaktionsraumes mit einem zweiten Gas mit Hilfe einer in Strömungsrichtung des ersten Gases angeordneten Sonde bekannt.

Die WO-A-97 25752 beschreibt eine mehrstufige Vorrichtung zur selektiven katalytischen Oxidation von Kohlenmonoxid, die aus mehreren, hintereinander gestapelten Platten besteht.

Die gattungsgemäße EP-A-0 776 861 offenbart ein Verfahren und eine Vorrichtung zur selektiven katalytischen Oxidation von Kohlenmonoxid. Bei der offenbarten Vorrichtung werden Platten mit Reaktionskammern und Wärmetauscherkammern abwechselnd aufeinandergestapelt. Die Zufuhr von Luft geschieht an den Stirnseiten der Reaktionsräume.

Es ist die Aufgabe der Erfindung, eine Vorrichtung zur selektiven katalytischen Oxidation von Kohlenmonoxid in einem wasserstoffreichen Gasgemischstrom mit einer vereinfachten Zuführung und Vermischung für das oxidierende Gas zu schaffen.

Diese Aufgabe wird durch eine Vorrichtung mit den Merkmalen des Patentanspruchs 1 gelöst.

Die Integration der Zuführung für das oxidierende Gas in den Zuführkanal für den Gasgemischstrom stellt eine fertigungstechnisch einfache und kostengünstige Lösung dar. In einer ersten günstigen Ausführung endet die Zuführung in den Sammelkanal, wo sich kein Katalysatormaterial befindet. Daher kann auf eine zusätzliche Mischstrecke oder Verteilerstrukturen verzichtet werden. Weiterhin ist das Verhältnis der Reaktions- und Kühlräume zueinander hinsichtlich Volumen und/oder Anzahl der Platten beliebig veränderbar.

Eine Integration mehrerer Stufen in eine bauliche Einheit ist problemlos möglich. Dabei bleibt durch die variable Einlaßposition der Zuführung für das oxidierende Gas dennoch eine hohe Flexibilität erhalten. Insgesamt weist die erfindungsgemäße Vorrichtung verbesserte Eigenschaften hinsichtlich Volumenbedarf, Gewicht und Kosten auf.

Durch vorteilhafte Ausbildungen der Vorrichtung zu Züführung des oxidierenden Gases gelingt eine zuverlässige Homogenisierung des Gasgemischs zwischen jeder einzelnen Stufe.

Weitere Vorteile und Ausgestaltungen der Erfindung gehen aus den Unteransprüchen und der Beschreibung hervor. Die Erfindung ist nachstehend anhand einer Zeichnung näher beschrieben, wobei

Fig. 1 den prinzipiellen Aufbau einer Plattenvorrichtung zur selektiven katalytischen Oxidation von Kohlenmonoxid in einem wasserstoffreichen Gasgemischstrom in Explosionsdarstellung,

Fig. 2 einen Schnitt durch die Vorrichtung gemäß Fig.1 entlang der Linie A-A für einen zweistufigen Aufbau,

Fig. 3 einen Schnitt durch die Vorrichtung gemäß Fig.1 entlang der Linie B-B ebenfalls für einen zweistufigen Aufbau,

Fig. 4 einen Schnitt durch die Vorrichtung gemäß Fig.1 entlang der Linie A-A für einen dreistufigen Aufbau, und

Fig. 5 einen Schnitt durch die Vorrichtung gemäß Fig.1 entlang der Linie B-B ebenfalls für einen dreistufigen Aufbau,

Fig. 6 einen Schnitt durch die Vorrichtung gemäß Fig.1 entlang der Linie A-A für einen dreistufigen Aufbau mit einer Sonde,

Fig. 7 eine vorteilhafte Ausgestaltung einer Sonde gemäß Fig. 4 zeigt und

Fig. 8 eine weitere vorteilhafte Ausgestaltung einer Sonde zeigt.

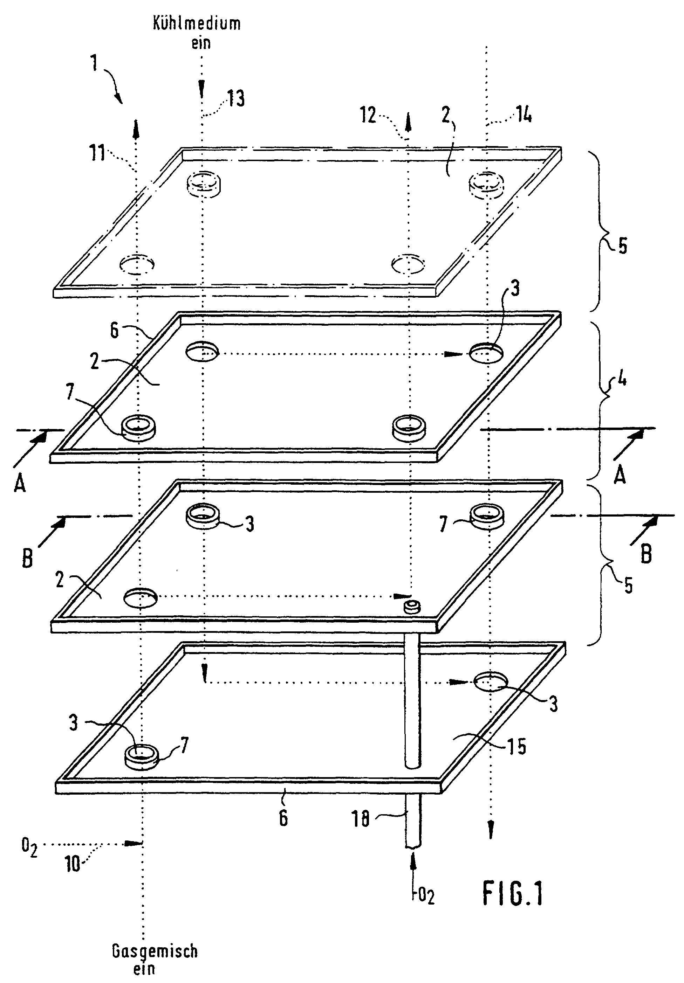

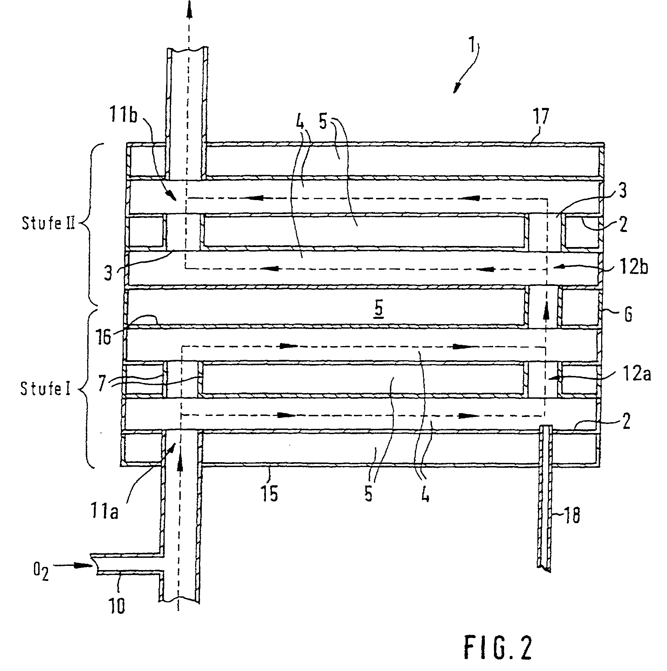

Die in Fig. 1 insgesamt mit 1 gekennzeichnete aber nur teilweise dargestellte Vorrichtung zur selektiven katalytischen Oxidation von in einem wasserstoffreichen Gasgemischstrom enthaltenem Kohlenmonoxid besteht aus einer Vielzahl aufeinander gestapelter Platten 2, wobei sich zwischen benachbarten Platten 2 nach dem Zusammenbau Reaktionsräume 4 beziehungsweise Kühlräume 5 ausbilden. Zur Vereinfachung sind in Fig. 1 lediglich ein Teil der Platten 2 dargestellt. Der Gesamtaufbau des Vorrichtung 1 kann aus den Fig. 2-7 entnommen werden.

Die im Ausführungsbeispiel gezeigte Vorrichtung zur selektiven katalytischen Oxidation, im folgenden als CO-Oxidator 1 bezeichnet, wird vorzugsweise zur Entfernung von Kohlenmonoxid aus dem Reformat einer Vorrichtung zur Wasserdampfreformierung eines Rohkraftstoffes, beispielsweise Methanol, verwendet. Solche Reformer werden insbesondere zur Wasserstoffherstellung für mobile Brennstoffzellenanwendungen eingesetzt. Insbesondere Brennstoffzellen mit einer protonenleitenden Elekrolytmembran, sogenannte PEM-Brennstoffzellen, reagieren auf Kohlenmonoxidanteile im Wasserstoffgas mit Vergiftungserscheinungen. Daher wird versucht, den Kohlenmonoxidanteil im Wasserstoffgas mit Hilfe eines CO-Oxidators 1 durch selektive katalytische Oxidation des Kohlenmonoxids unter Zugabe von Sauerstoff an einem geeigneten Oxidationskatalysator zu reduzieren. Um den Kohlenmonoxidanteil auf Werte < 50 ppm zu reduzieren werden vorzugsweise mehrstufige CO-Oxidatoren 1 eingesetzt, wobei zu jeder Stufe separat Sauerstoff zugeführt wird.

Obwohl die Erfindung im folgenden anhand eines CO-Oxidators 1 für die Entfernung von Kohlenmonoxid aus dem Produktgas einer Vorrichtung zur Wasserdampfreformierung von Methanol beschrieben wird, soll dadurch der Schutzbereich nicht auf diese Anwendung beschränkt werden.

Der Sauerstoff wird vorzugsweise in Form von Luftsauerstoff in vorbestimmter Menge zugeführt. Hierfür können nicht dargestellte Dosiervorrichtung vorgesehen werden. Als Katalysatormaterial für die selektive katalytische CO-Oxidation eignet sich unter anderem Platin und/oder Ruthenium auf einem Träger aus Zeolith oder Aluminiumoxid. Dieses Katalysatormaterial kann in beliebiger Form in den Reaktionsraum 4 eingebracht werden. Neben der Verwendung von Schüttungen oder Pellets ist es auch möglich, das Katalysatormaterial auf die Plattenoberflächen oder auf Katalysatorträgereinheiten aufzubringen.

Durch die Zugabe von Sauerstoff kommt es in dem Wasserstoff und Kohlenmonoxid enthaltendem Gasgemischstrom zu konkurrierenden Oxidationsreaktionen:

$$CO + \tfrac{1}{2}\,O_2 \Rightarrow CO_2 \qquad \text{(erwünscht)}$$

und

$$H2 + \tfrac{1}{2}\,O2 \Rightarrow H_2O \qquad \text{(unerwünscht)}$$

Das Katalysatormaterial sowie die Betriebsbedingungen werden derart gewählt, daß die erste Reaktion gegenüber der zweiten Reaktion bevorzugt, also selektiv, abläuft und sich somit zwar der CO-Anteil im Gasgemischstrom verringert, gleichzeitig aber möglichst wenig Wasserstoff verbraucht wird. Da beide Reaktionen exotherm verlaufen ist es notwendig, die entstehende Wärme, beispielsweise mit Hilfe eines Kühlmediums, aus dem CO-Oxidator 1 abzuführen. Hierzu sind im CO-Oxidator 1 Kühlräume 5 vorgesehen.

Entlang des Randes sind auf den Platten 2 jeweils Erhebungen 6 vorgesehen, die beim Zusammenbau jeweils mit der Unterseite der benachbarten Platte 2 in Kontakt kommen, wobei die Erhebungen 6 und die Unterseite der benachbarten Platte 2 mit Hilfe von Dichtungen oder vorzugsweise durch Schweißen gasdicht miteinander verbunden werden. Dadurch entstehen die weiter oben bereits beschriebenen Reaktionsbeziehungsweise Kühlräume 4, 5. In den Platten 2 sind außerdem jeweils Öffnungen 3 - im folgenden als Bohrungen bezeichnet - zur Zu- beziehungsweise Abfuhr des Gasgemischstromes beziehungsweise des Kühlmediums vorgesehen. Weiterhin sind um die Bohrungen 3 teilweise ringförmige Erhebungen 7 angeordnet, die beim Zusammenbau des CO-Oxidators 1 ebenfalls mit der Unterseite der jeweils benachbarten Platte 2 gasdicht verbunden werden. In den Reaktions- beziehungsweise Kühlräumen 4, 5 können weitere Strömungsleitstrukturen vorgesehen werden, die aber zur Vereinfachung in der Zeichnung nicht dargestellt sind.

Die Bohrungen 3 in den einzelnen Platten 2 bilden nach dem Zusammenbau insgesamt einen Zuführbeziehungsweise Abführkanal 11, 12 für den Gasmischstrom. Für das Kühlmedium werden durch die Bohrungen 3 entsprechende Zubeziehungsweise Abführkanäle 13, 14 gebildet. Die Richtung der Medienführung in den Kanälen 11-14 und den entsprechenden Reaktions- beziehungsweise Kühlräumen 4, 5 ist in der Zeichnung durch gepunktete Pfeile dargestellt.

Bei jeder Platte 2 sind nun zur Ausbildung von Reaktionsräumen 4 beziehungsweise Kühlräumen 5 jeweils alle vom Kühlmedium beziehungsweise dem Gasgemischstrom durchströmten Bohrungen 3 mit einer ringförmigen Erhebung 7 umgeben. Somit stehen die Reaktionsräume 4 nur in Strömungsverbindung mit dem Zuführ- beziehungsweise Abführkanal 11, 12 für den Gasgemischstrom, während die Kühlräume 5 nur in Strömungsverbindung mit den Zuführbeziehungsweise Abführkanal 13, 14 für das Kühlmedium stehen. Dadurch wird eine Vermischung des Gasgemischstromes mit dem Kühlmedium verhindert.

Im gezeigten Ausführungsbeispiel werden die Reaktionsbeziehungsweise Kühlräume 4, 5 jeweils quer und in Gegenstromrichtung vom entsprechenden Medium durchströmt. Die Anordnung der Kanäle 11-14 und die Strömungsrichtungen können jedoch in nahezu beliebiger Weise dem Bedarf angepaßt werden. Auch eine Kreuzstromanordnung ist möglich. Weiterhin entspricht die in Fig. 1 gezeigte Ausführungsform einer zumindest zweistufigen Vorrichtung, wobei der in der ersten Stufe I benötigte Sauerstoff vor der ersten Stufe I über eine externe Zuführleitung 10 in den Gasgemischstrom zugegeben wird. Es ist jedoch auch möglich, den Sauerstoff direkt in den Zuführkanal 11 der ersten Stufe zuzuführen.

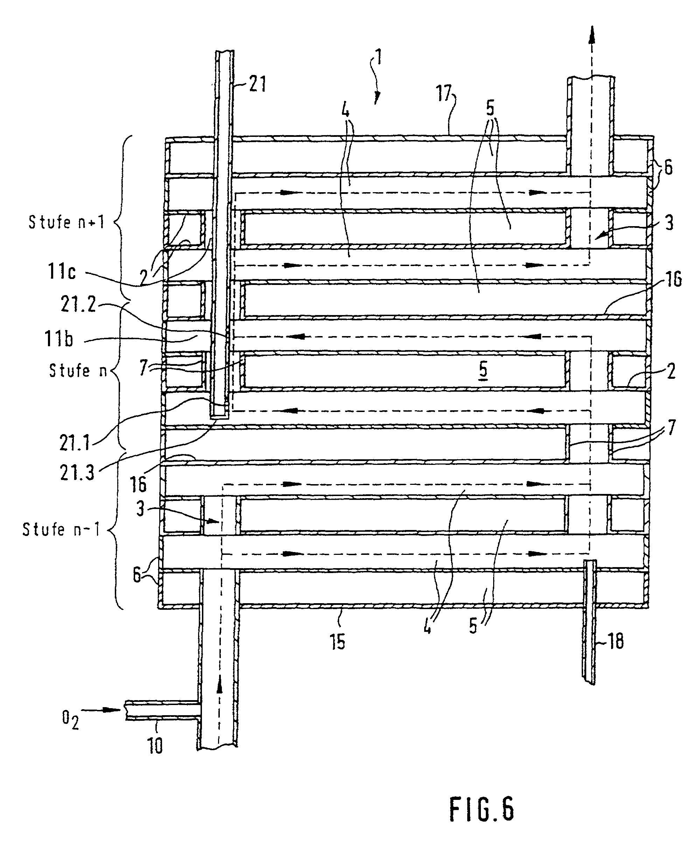

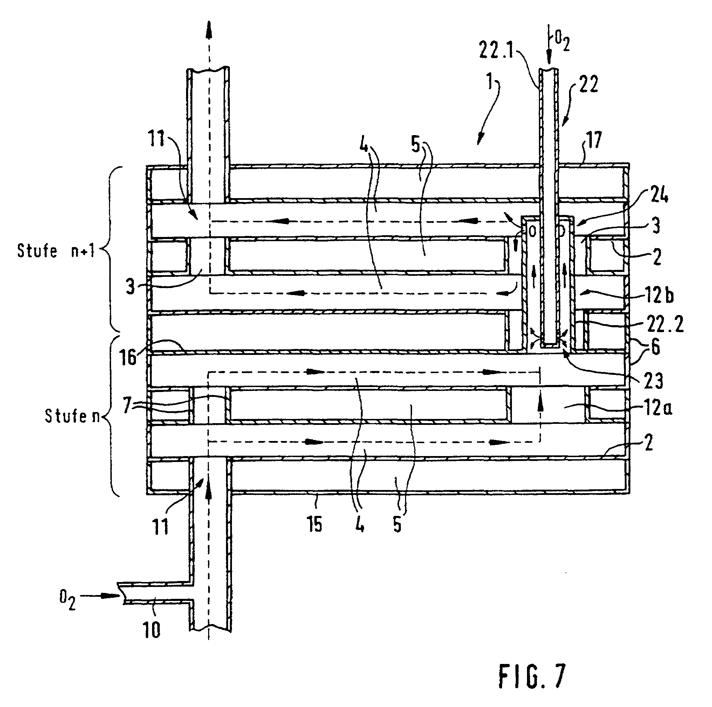

Der Sauerstoff für die zweite Stufe II wird vorzugsweise mit Hilfe einer Sonde 18 in den Abführkanal 12a für den Gasgemischstrom der ersten Stufe I eingebracht. Im einfachsten Fall ist die Sonde 18 als rohrförmige Leitung mit beliebigem Querschnitt ausgebildet. Da der Sauerstoff in. den Abführkanal 12a der ersten Stufe I eingebracht wird steht er für die Reaktion in dieser ersten Stufe nicht zur Verfügung. Der Sauerstoff kann sich vielmehr innerhalb des Abführkanals 12a mit dem Gasgemischstrom aus der ersten Stufe I vermischen. Da der Abführkanal 12a der ersten Stufe I gleichzeitig als Zuführkanal 12b für die zweite Stufe II dient, wird somit den Reaktionsräumen 4 der zweiten Stufe II ein homogenes Gas/Sauerstoffgemisch zugeführt. Auf zusätzliche externe Misch- oder Verteilungsstrukturen kann daher verzichtet werden. Weitere günstige Ausgestaltungen einer Sonde 18 bzw. einer Sauerstoffzufuhr sind in den Figuren 6 und 7 dargestellt.

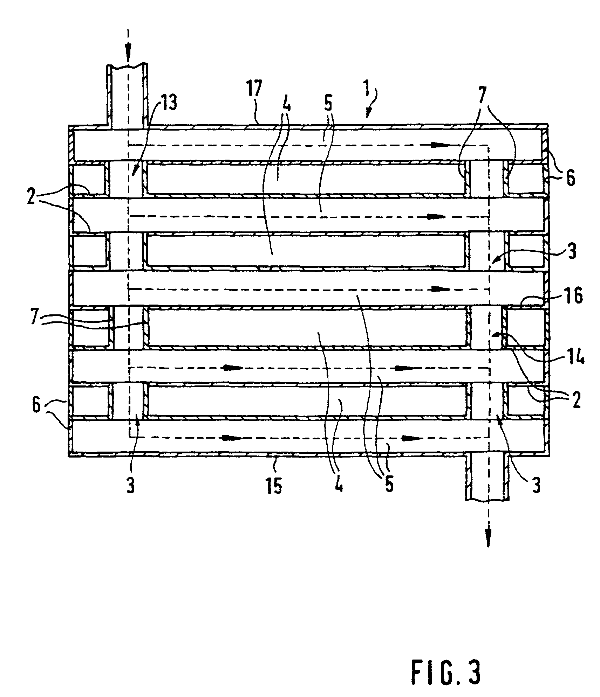

Der in den Fig. 2 und 3 dargestellte CO-Oxidator 1 besteht aus zwei mit I und II bezeichneten Oxidationsstufen. Die Fig. 2 und 3 zeigen Schnittdarstellungen durch den in Fig. 1 teilweise gezeigten CO-Oxidator 1 im Bereich der Zu- und Abführkanäle 11-14 für den Gasgemischstrom (Fig. 2) beziehungsweise für das Kühlmedium (Fig. 3). Zur Ausbildung zweier Stufen I, II wird eine Trennplatte 16 im Plattenstapel angeordnet. In der Trennplatte 16 ist keine Bohrung 3 für den Zuführkanal 11a vorgesehen. Dadurch wird der Zuführkanal 11a für den Gasgemischstrom am Ende der ersten Stufe I durch die Trennplatte 16 abgeschlossen. Der Gasgemischstrom verteilt sich daher auf die in der ersten Stufe I vorhanden Reaktionsräume 4 und wird nach dem Durchströmen der Reaktionsräume 4 im Abführkanal 12a wieder gesammelt. Im Ausführungsbeispiel sind in den beiden Stufen I, II jeweils lediglich zwei Reaktionsräume 4 vorgesehen. Die Anzahl kann aber beliebig variiert werden, wodurch eine gute Skalierbarkeit des gesamten CO-Oxidators 1, aber auch der einzelnen Stufen I, II gegeben ist. Der in der ersten Stufe I benötigte Sauerstoff wird bereits vor der ersten Stufe über eine Zuführleitung 10 in den Gasgemischstrom zugegeben. Es ist jedoch auch möglich, den Sauerstoff über eine weitere Sonde direkt in die erste Stufe I zuzuführen.

In der zweiten Stufe II ist die Funktion der Kanäle 11, 12 für den Gasgemischstrom vertauscht. Aus dem Abführkanal 12a der ersten Stufe I wird in der zweiten Stufe II der Zuführkanal 12b. Entsprechend ist der Abführkanal 11b in der zweiten Stufe II an der in der ersten Stufe I für den Zuführkanal 11a vorgesehenen Stelle angeordnet. Dadurch ist die Strömungsrichtung für den Gasgemischstrom in der zweiten Stufe II gegenüber der ersten Stufe I umgekehrt. Die Strömungsrichtung in den Kühlräumen 5 bleibt erhalten.

Der Plattenstapel wird durch Endplatten 15, 17 begrenzt, in der nur ein Teil der üblichen Bohrungen 3 vorgesehen sind. Durch die obere Endplatte 17 wird der Zuführkanal 12b für den Gasgemischstrom auch am Ende der zweiten Stufe II abgeschlossen. Der Gasgemischstrom verteilt sich daher wiederum auf die in der zweiten Stufe II vorhanden Reaktionsräume 4 und wird nach dem Durchströmen der Reaktionsräume 4 im Abführkanal 11b gesammelt und aus dem CO-Oxidator 1 abgeführt. Auf der Kühlmittelseite ist entsprechend jeweils nur eine Bohrung 3 für den Zubeziehungsweise Abführkanal 13, 14 in den Endplatten 17 beziehungsweise 15 angeordnet.

Der Sauerstoff für die zweite Stufe II wird mit Hilfe einer Sonde 18 in den Abführkanal 12a der ersten Stufe I eingebracht. Im einfachsten Fall ist die Sonde 18 als einfaches Rohr mit kreisförmigem Querschnitt ausgebildet. Es können aber auch beliebige andere Querschnittsformen als rohrförmige Sonde 18 verwendet werden. Bevorzugte Ausführungen sind in den Figuren 6 und 7 dargestellt. Da der Sauerstoff in den Abführkanal 12a der ersten Stufe I eingebracht wird, steht er für die Reaktion in dieser ersten Stufe I nicht zur Verfügung. Zur besseren Verteilung des Sauerstoffs kann die Sonde 18 auch mit radialen Austrittsöffnungen versehen werden, wobei in diesem Fall die axiale Öffnung der Sonde 18 verschlossen werden kann. Ist die Sonde 18 derart angeordnet, daß der Sauerstoff in Strömungsrichtung des Gasgemischstromes austritt, so können zusätzlich radiale Umlenkvorrichtungen, die eine bessere Vermischung des Sauerstoffs mit dem Gasgemischstrom verursachen, vorgesehen werden.

Gemäß Ausführungsbeispiel ist die Sonde 18 direkt von unten durch die Endplatte 15 in den Abführkanal 12a der ersten Stufe I geführt. Es ist jedoch auch möglich, die Sonde 18 von oben durch die Endplatte 17 und den Zuführkanal 12b der zweiten Stufe II in den Abführkanal 12a der ersten Stufe I zu führen.

Die Verwendung einer solchen Sonde 18 weist den Vorteil auf, daß der Eintrittsort des Sauerstoffs in den Abführkanal 12a bei veränderter Stapeldicke durch eine Änderung der Länge der Sonde 18 einfach angepaßt werden kann. Außerdem müssen für eine ausreichende Verteilung und Dosierung des Sauerstoffs nicht in jeder Platte Bohrungen oder dergleichen vorgesehen werden, was zu einer Vereinfachung der Vorrichtung und dadurch zu einer Reduzierung der Kosten führt.

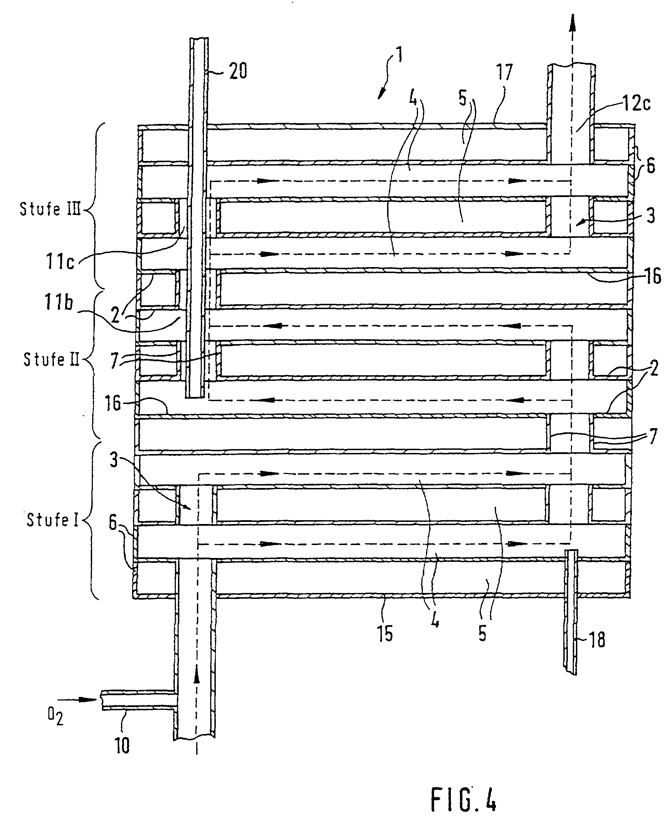

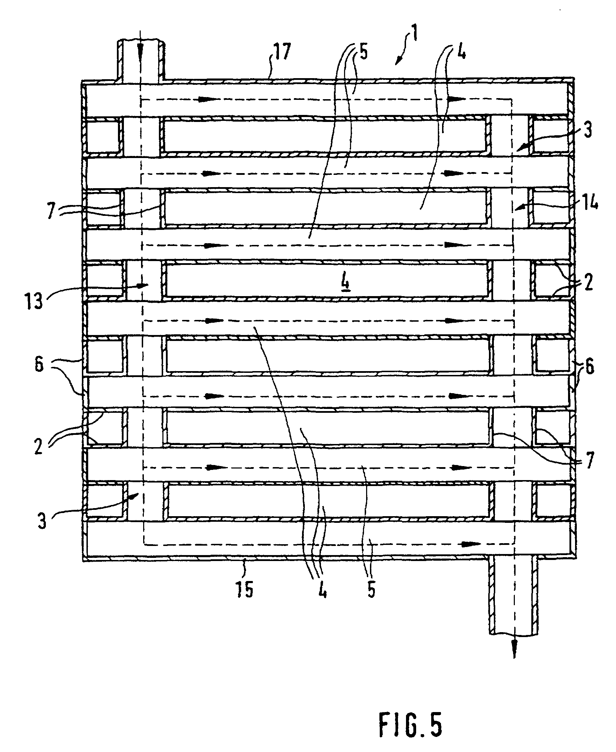

Das oben beschriebene Konzept ist auch auf drei- oder mehrstufige Vorrichtungen anzuwenden. In den Fig. 4 und 5 ist beispielsweise ein dreistufiger CO-Oxidator 1 dargestellt, wobei gleiche Teile gegenüber den anderen Figuren mit gleichen Bezugszeichen gekennzeichnet sind. Im Gegensatz zu Fig. 2 und 3 ist jedoch zwischen der zweiten und dritten Stufe II, III eine weitere Trennplatte 16 vorgesehen. Die Erfindung ist auch für vier- oder mehrstufige Vorrichtungen geeignet, bei denen demnach die Zufuhr des oxidierenden Mediums in entsprechender Weise zwischen zwei aufeinanderfolgende Stufen erfolgt.

Die Strömungsführung in Fig. 4 entspricht bis einschließlich der zweiten Stufe II dem Ausführungsbeispiel gemäß Fig. 2. Der Abführkanal 11b für den Gasgemischstrom der zweiten Stufe II dient hier aber gleichzeitig als Zuführkanal 11c für die dritte Stufe III. In diesen Zuführkanal 11c für die dritte Stufe III ist jedoch zusätzlich von oben durch die Trennplatte 17 eine zweite Sonde 20 zur Zufuhr von Sauerstoff entgegen der Strömungsrichtung des Gasgemischstromes eingeführt, die sich bis in den Bereich des Abführkanals 11b der zweiten Stufe II erstreckt und dort endet. Somit wird der zusätzliche Sauerstoff in das Produktgas der zweiten Stufe eingeleitet und kann sich dort mit dem Gasgemischstrom vermischen. Zur dritten Stufe III wird daher wiederum ein homogenes Gas/Sauerstoffgemisch zugeführt. Die weiter oben anhand der Sonde 18 erläuterten Gestaltungsmöglichkeiten gelten selbstverständlich auch für die Sonde 20.

Da der Zuführkanal 11c vor der Endplatte 17 endet ist der Gasgemischstrom wiederum gezwungen, die Reaktionsräume 4 der dritten Stufe III zu durchströmen und erst anschließend durch den Abführkanal 12c der dritten Stufe III den CO-Oxidator 1 zu verlassen. Wie bereits oben beschrieben ist es auch bei mehrstufigen Vorrichtungen problemlos möglich, die Anzahl und die Reihenfolge der Reaktionsbeziehungsweise Kühlräume 4, 5 in den einzelnen Stufen zu variieren. Dadurch kann auch bei mehrstufigen Anordnungen eine einfache Skalierbarkeit gewährleistet werden.

Entgegen der in den Fig. 4 und 5 gezeigten Position kann die Sonde 20 jedoch auch von unten durch den Zuführkanal 11a für den Gasgemischstrom der ersten Stufe I und durch die Trennplatte 16 zwischen erster und zweiter Stufe I, II in den Abführkanal 11b der zweiten Stufe II geführt werden. Prinzipiell ist es bei allen Anordnungen möglich, die Sonden 18, 20 beispielsweise seitlich in den jeweiligen Abführkanal einzuführen. Dies ist jedoch im Hinblick auf die Herstellung des CO-Oxidators 1 aufwendiger und daher weniger sinnvoll.

In den Ausführungsbeispielen sind für die Kühlmittelseite keine Trennplatten 16 vorgesehen. Es ist jedoch auch hier möglich, solche Trennplatten 16 vorzusehen, so daß sich eine Hintereinanderschaltung zweier oder mehrerer Kühlraumpakete ergibt. Außerdem kann das Kühlmedium entgegen dem Ausführungsbeispiel auch im Gleichstrom zum Gasgemischstrom geführt werden. Weiterhin ist es möglich, zur Kühlung des CO-Oxidators 1 in den Kühlräumen 5 eine endotherme Reaktion ablaufen zu lassen. Bei Gaserzeugungssystemen für Brennstoffzellen könnten beispielsweise Wasser und Methanol in den Kühlräumen 5 verdampft werden und somit den Reaktionsräumen 5 Wärme entzogen werden. Das Kühlmedium wäre in diesem Zusammenhang die zu verdampfende Flüssigkeit. Gleichzeitig ist es möglich, eine Reformierungsreaktion in den Kühlräumen ablaufen zu lassen. Hierzu werden die Kühlräume 5 mit einem geeigneten Katalysator gefüllt. Als Kühlmedium wird dann ein Wasserdampf/Methanolgemisch durch die Kühlräume 5 geführt, wobei bei der endothermen Reformierung den Reaktionsräumen 4 des CO-Oxidators 1 wiederum Wärme entzogen wird.

Eine vorteilhafte weitere Ausgestaltung einer Sauerstoffzufuhr ist in Fig. 6 dargestellt. Grundsätzlich kann der Querschnitt der in den Ausführungsbeispielen beschriebenen rohrförmigen Sonden beliebig sein, wie etwa kreisrund, oval oder eckig. Die Anordnung der Reaktions- und Kühlräume 4, 5 ist vergleichbar mit den in den vorangegangenen Figuren dargestellten dreistufigen Vorrichtung. Gleiche Elemente sind mit gleichen Bezugszeichen versehen. Eine Sonde 21 reicht durch eine Stufe n+1 zur Stufe n. Die Sonde ist an ihrem unteren Ende 21.3 geschlossen.

Die Sonde 21 ist entlang ihrer Längsachse mit kleinen Bohrungen, von denen zwei 21.1, 21.2 dargestellt sind, versehen, welche an den Eintrittsorten der einzelnen Kanäle 4 in den Abführkanal 11b jeweils korrespondierend mit der Höhe des zufließenden Reformatstromes angeordnet sind. Die Bohrungen 21.1, 21.2 können auf einer Seite der Sonde 21, vorzugsweise in der Zustromseite des Reformats angeordnet und/oder auch jeweils radial um die Sonde 21 verteilt sein. Der Sauerstoff- oder Luftvolumenstrom wird somit entsprechend dem lokal vorhandenen Reformatvolumenstrom in den Sammelkanal 11b zugeführt, so daß lokal jeweils eine günstige Sauerstoff menge vorhanden ist. Beim Eintritt in den Zuführkanal 11c sind die Medien dann homogen gemischt. Würde zu früh zudosiert, könnte sonst ein explosionsfähiges Gemisch entstehen, bei einer zu späten Zudosierung könnten leicht Gleichverteilungsprobleme der Medien auftreten. Dies kann durch diese Ausgestaltung vermieden werden. Als Sonde zur Zudosierung eignen sich auch Fritten oder andere übliche Dosiereinrichtungen.

Die Lösung erlaubt eine kompakte Bauweise des Reaktors sowie eine Integration von mehreren Reaktorstufen in eine bauliche Einheit. Durch die Integration im Sammel- bzw. Abführkanal entfällt eine etwaige Mischstrecke, was auch bei baulich getrennten Reaktoren von Vorteil ist.

Das Verhältnis der verschiedenen Reaktionsräume, insbesondere Volumen oder Plattendicke, ist beliebig veränderbar, die Sauerstoffzudosierung kann fertigungstechnisch einfach daran angepaßt werden, indem der Abstand der Bohrungen 21.1, 21.2 in Längsrichtung der Sonde 21 und/oder der Durchmesser der Bohrungen 21.1, 21.2 entsprechend verändert wird.

Es ist auch möglich, eine lokale Zudosierung des Sauerstoffs nicht an jedem Eintrittsort des Reformats in den Abführkanal 11 vorzusehen, sondern nur an jedem zweiten oder dritten oder nten Eintrittsort. Im gezeigten Beispiel würde dann Sauerstoff nur in das Reformat aus einem Kanal statt in das Reformat beider Kanäle 4 zudosiert. Damit kann eine Fertigung von entsprechenden Sonden 21 für Anordnungen mit mehr als zwei Kühl- und/oder Reaktionsräumen pro Reaktorstufe vereinfacht und billiger werden.

Eine weitere günstige Möglichkeit, insbesondere in einem längeren Abführkanal mit einer größeren Anzahl von Reaktionsräumen, besteht darin, einen Versatz der Bohrungen der Sonde 21 vorzusehen. Damit wird bewirkt, daß beispielsweise nicht bereits an dem ersten, vordersten Reaktionsraum im Abführkanal, sondern erst ab einem weiteren Reaktionsraum im Abführkanal, z.B. dem dritten oder vierten, Sauerstoff zudosiert wird.

In Fig. 7 ist eine Detaildarstellung einer weiteren günstigen Ausführungsform einer Sonde 22 dargestellt, welche ebenfalls eine zuverlässige und gute Durchmischung der Medien erlaubt. Das Anbringen üblicher, Turbulenzen erzeugender Mittel zur besseren Durchmischung der Medien ist wegen der Ausbildung von unerwünschten Druckgradienten im Zuführ- und/ oder Abführkanal wenig vorteilhaft.

Eine günstige Anordnung besteht darin, die Sonde 22 doppelwandig auszubilden, wobei die Sauerstoffzufuhr durch ein inneres Rohr 22.1 erfolgt, während das Reformat aus dem Abführkanal 12 der vorangegangenen Stufe in dem das innere Rohr 22.1 umgebende Rohr 22.2 geführt wird. Das äußere Rohr 22.2 kann koaxial um das innere Rohr 22.1 oder auch exzentrisch zum inneren Rohr 22.1 angeordnet sein. Besonders zweckmäßig wird der Sauerstoffaustritt durch Bohrungen 23 im inneren Rohr 22.1 in dem Bereich des Abführkanals vorgesehen, in dem der gesamte Volumenstrom des Reformats der vorangegangenen Stufe zusammentrifft, d.h. in etwa auf der Höhe zwischen dem letzten Reaktionsraum der vorangegangenen Stufe n und dem ersten Reaktionsraum der nächsten Stufe n+1. Im Beispiel der Figur 2 sind die entsprechenden Stufen n=1 und n+1=2.

Die Ausführung der Sonde ist besonders für Systeme mit einer hohen Lastspreizung geeignet, für die eine hohe Dynamik notwendig ist.

Vorzugsweise ist die Strömungsrichtung des Mediums im inneren Rohr 22.1 entgegengesetzt zu der im äußeren Rohr 22.2. Der Sauerstoff gelangt am unteren Ende durch Bohrungen 23 aus dem inneren 22.1 in das äußere Rohr 22.2, wo er mit dem zuströmenden Reformat der vorangegangenen Stufe zusammentrifft. Das Gemisch wird im äußeren Rohr 22.2 zu Bohrungen 24 am oberen Ende des äußeren Rohrs 22.2 entgegen der Strömungsrichtung im inneren Rohr 22.1 geführt und entlang der Laufstrecke gemischt. Durch die Bohrungen 24 im äußeren Rohr 22.2 gelangt das nunmehr homogene Gemisch in den Zuführkanal der Reaktionsräume der nächsten Stufe n+1 und strömt zumindest teilweise entgegen der Strömungsrichtung im äußeren Rohr 22.2 in den Zuführkanal der Reaktor-Stufe.

Zwischen äußerem 22.2 und innerem Rohr 22.1 können nunmehr zusätzliche, nicht dargestellte Mischelemente und Turbulenzerzeuger zur besseren Durchmischung der Medien angeordnet werden, ohne daß diese einen Druckgradienten im Zuführungskanal zu den Reaktionsräumen der nächsten Stufe hervorrufen, da das Mischgebiet vom Zuführkanal 12b getrennt ist. In der Fig. 7 ist die Sonde gegen die Stromrichtung des Zuführ- bzw. Abführkanals in diesen eingeführt, es ist jedoch auch möglich, diese in Stromrichtung einzuführen.

Um einen Druckverlust im Zuführkanal 12b möglichst gering zu halten, können einfache strömungstechnische Maßnahmen vorgenommen werden. Eine günstige Maßnahme ist die Reduzierung des Durchmessers der koaxialen Sonde 22 und/oder eine Querschnittsvergrößerung des Zuführkanals 12.

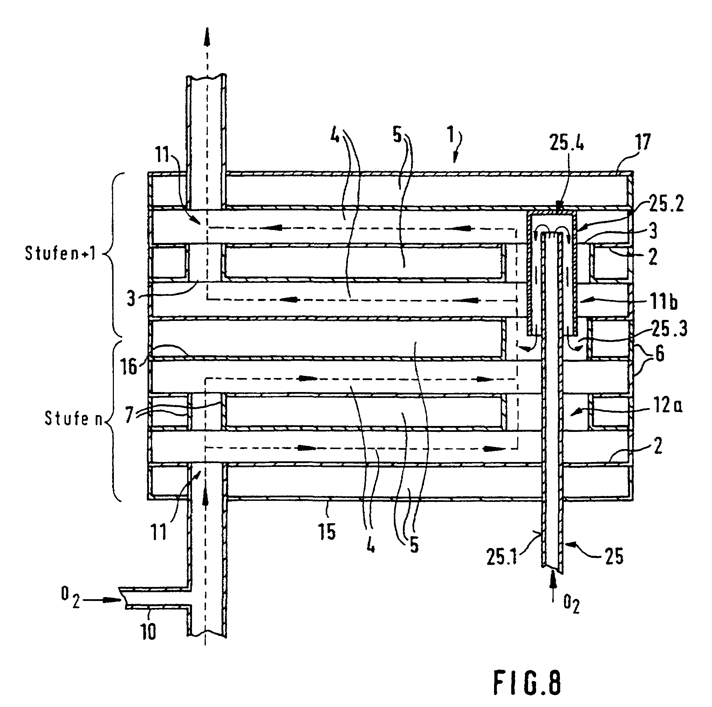

Eine weitere günstige Ausbildung einer Sonde zur Sauerstoff- bzw. Luftzufuhr ist in Fig. 8 dargestellt. Dort ist eine Sonde 25 mit einem inneren Rohr 25.1 und einer Umlenkeinrichtung 25.2 im Kanal 12 dargestellt, bei der Sauerstoff in Strömungsrichtung im inneren Rohr 25.1 in den Kanal 12 eingeführt wird. Der Sauerstoff tritt aus dem inneren Rohr 25 aus, vorzugsweise am unteren, offenen Ende oder durch radial angebrachte Öffnungen in der Rohrwand und wird in der Umlenkeinrichtung 25.2 umgelenkt, so daß der Sauerstoff zwischen Rohr 25.1 und äußerer Begrenzung der Umlenkeinrichtung 25.2 gegen den Strom des Gases im Kanal 12 strömt. Vorzugsweise wird der Sauerstoff in der Umlenkeinrichtung 25.2 durch eine Öffnung 25.3 in den Bereich des Kanals 12a geleitet, in dem die einzelnen Gasströme aus den Reaktionsräumen der vorangegangenen Stufe n zum Gesamtvolumenstrom zusammentreffen und in den Bereich des Zuführkanals für die folgende Stufe n+1 gelangen, so daß sich der Sauerstoff mit dem Gesamtvolumenstrom mischt, bevor sich der gemischte Gasstrom im Zuführkanal 12b auf die Reaktionsräume 4 in der folgenden Stufe n+1 aufteilt.

Die Umkehrvorrichtung 25.2 ist vorzugsweise ein in Strömungsrichtung des Sauerstoffs im inneren Rohr einseitig geschlossenes (25.4), das innere Rohr 25.1 im wesentlichen koaxial umgebendes Rohrstück oder eine vergleichbare Anordnung.

Verschiedene unterschiedliche Ausführungsformen der Sonden (18, 20, 21, 22, 25) können auch in einem einzigen Reaktor kombiniert verwendet werden.

Es ist auch möglich, eine Zudosierung des oxidierenden Mediums im Eingangsbereich vor der ersten Stufe des Reaktors durchzuführen. Dies ist vorteilhaft, wenn dem Reaktor ein anderer Reaktor, z.B. ein Reformer in Plattenbauweise oder ein Wärmetauscher, vorgeschaltet ist. Die Sonde zur Zufuhr des oxidierenden Mediums wird vorzugsweise in den Abstrom des vorgeschalteten Reaktors eingeführt.

**Patentansprüche**

1. Mehrstufige Vorrichtung (1) zur selektiven katalytischen Oxidation von in einem wasserstoffreichen Gasgemischstrom enthaltenem Kohlenmonoxid in Plattenbauweise, wobei

   - alle Stufen in einem gemeinsamen Plattenstapel enthalten sind,
   - zwischen aufeinanderfolgenden Platten (2) jeweils ein mit Katalysator gefüllter Reaktionsraum (4) oder ein von einem Kühlmedium durchströmter Kühlraum (5) ausgebildet ist,

- die Platten (2) Öffnungen (3) zur Ausbildung von Zubeziehungsweise Abführkanälen (11-14) für die Reaktionsbeziehungsweise Kühlräume (4, 5) aufweisen, und die Reaktions- beziehungsweise Kühlräume (4, 5) jeweils ausschließlich mit den Zu- und Abführkanälen (11-14) für den Gasgemischstrom beziehungsweise für das Kühlmedium in Strömungsverbindung stehen,

- zwischen zwei aufeinanderfolgenden Stufen (I, II) eine Trennplatte (16) ohne Öffnung für den Zuführkanal (11a) für den Gasgemischstrom angeordnet ist,

- daß separate Vorrichtungen (10, 18) zur Zuführung von oxidierendem Gas in die erste und mindestens eine weitere Stufe (I, II) vorgesehen sind,

**dadurch gekennzeichnet,**
**daß** die Vorrichtung zur Zufuhr des oxidierenden Gases (18, 20, 21, 22) zur nächsten Stufe (n+1, II) in den Abführkanal (12a) für den Gasgemischstrom der vorangehenden Stufe (n, I) führt.

2. Vorrichtung nach Anspruch 1,
**dadurch gekennzeichnet,**
**daß** drei Stufen (III) vorgesehen sind, daß alle drei Stufen (I-III) als gemeinsamer Plattenstapel ausgebildet sind, daß zwischen der zweiten und dritten Stufe (II, III) eine weitere Trennplatte (16) ohne Öffnung (3) für den Zuführkanal (12b) für den Gasmischstrom der zweiten Stufe (II) angeordnet ist, daß eine weitere Vorrichtung (20) zur Zufuhr des oxidierenden Gases zur dritten Stufe (III) vorgesehen ist, und daß die Vorrichtung zur Zufuhr des oxidierenden Gases (18) zur dritten Stufe (III) in den Abführkanal (11b) für den Gasgemischstrom der zweiten Stufe (II) führt.

3. Vorrichtung nach Anspruch 1,
**dadurch gekennzeichnet,**
**daß** die Vorrichtung zur Zufuhr des oxidierenden Gases (18) als rohrförmige Sonde ausgebildet ist, die durch die Endplatte (15) oder durch die Endplatte (17) und den Zuführkanal (12b) der zweiten Stufe (II) in den Abführkanal (12) der ersten Stufe (I) geführt ist und dort endet.

4. Vorrichtung nach Anspruch 2,
**dadurch gekennzeichnet,**
**daß** die Vorrichtung zur Zufuhr des oxidierenden Gases (18) als rohrförmige Sonde ausgebildet ist, die durch die Endplatte (15) oder durch die Endplatte (17), den Abführkanal (12c) der dritten Stufe (III), die Trennplatte (16) zwischen der zweiten und dritten Stufe (II, III) und den Zuführkanal (12b) der zweiten Stufe (II) in den Abführkanal (12a) der ersten Stufe (I) geführt ist und dort endet.

5. Vorrichtung nach Anspruch 2,
**dadurch gekennzeichnet,**
**daß** die Vorrichtung zur Zufuhr des oxidierenden Gases (20) als rohrförmige Sonde ausgebildet ist, die durch die Endplatte (17) und entgegen der Strömungsrichtung des Gasgemischstromes durch den Zuführkanal (11c) der dritten Stufe (III) in den Abführkanal (11b) der zweiten Stufe (II) geführt ist und dort endet.

6. Vorrichtung nach Anspruch 2,
**dadurch gekennzeichnet,**
**daß** die Vorrichtung zur Zufuhr des oxidierenden Gases (20) als rohrförmige Sonde ausgebildet ist, die durch den Zuführkanal (11a) der ersten Stufe (I) und die Trennplatte (16) zwischen der ersten und zweiten Stufe (I, II) in den Abführkanal (11b) der zweiten Stufe (II) geführt ist und dort endet.

7. Vorrichtung nach Anspruch 1,
**dadurch gekennzeichnet,**
**daß** die Vorrichtung zur Zufuhr des oxidierenden Gases (18, 20, 21) als rohrförmige Sonde ausgebildet ist, die Austrittsöffnungen (21.1, 21.2) aufweist, welche an den Eintrittsorten der einzelnen Reaktionsräume (4) in den Abführkanal (11b) jeweils korrespondierend mit der Höhe des zufließenden Reformatstroms angeordnet sind.

8. Vorrichtung nach Anspruch 7,
**dadurch gekennzeichnet,**
**daß** mehrere Austrittsöffnungen (21.1, 21.2) radial um die Sonde (21) herum angeordnet sind.

9. Vorrichtung nach Anspruch 7,
**dadurch gekennzeichnet,**
**daß** mehrere Austrittsöffnungen (21.1, 21.2) den Abführkanälen (12a) zugewandt sind.

10. Vorrichtung nach Anspruch 1,
**dadurch gekennzeichnet,**
**daß** die Vorrichtung zur Zufuhr des oxidierenden Gases als rohrförmige, koaxiale Sonde (22) ausgebildet ist, wobei ein inneres Rohr (22.1) an dem der vorangegangenen Stufe (n) zugewandten Ende Austrittsöffnungen (23) in ein äußeres Rohr (22.2) aufweist und das äußere Rohr (22.2) an dem der nächsten Stufe (n+1) zugewandten Seite Austrittsöffnungen (24) in den Zuführkanal der nächsten Stufe (n) aufweist.

11. Vorrichtung nach Anspruch 1,
**dadurch gekennzeichnet,**
**daß** die Vorrichtung zur Zufuhr des oxidierenden Gases als rohrförmige Sonde (25) ausgebildet ist, wobei ein inneres Rohr (25.1) an dem der folgenden Stufe (n+1) zugewandten Ende eine oder mehrere Austrittsöffnungen (25.4) in eine Umlenkeinrichtung (25.2) an dem der vorangegangenen Stufe (n) zugewandten Seite eine oder mehrere Austrittsöffnungen (25.3) in den Abführkanal (12a) der vorangegangenen Stufe (n) aufweist.

**12.** Vorrichtung nach Anspruch 1,
**dadurch gekennzeichnet,**
**daß** das oxidierende Gas in den Bereich zwischen Abführkanal (12a) der vorangegangenen Stufe (n) und den Zuführkanal (12b) der folgenden Stufe (n+1) zugeführt ist, in dem Gasströme aus den Reaktionsräumen (4) zu einem Gesamtvolumenstrom vereinigt sind.

**Claims**

**1.** Multi-stage apparatus (1) with a plate structure for selective catalytic oxidation of carbon monoxide contained in a hydrogen-rich mixed gas flow wherein

- all stages are contained in a common plate stack,
- a reaction chamber (4) filled with catalyst or a cooling chamber (5) traversed by a coolant is disposed respectively between consecutive plates (2),
- the plates (2) have orifices (3) so as to form delivery and discharge passages (11-14) and the reaction and cooling chambers (4, 5) are respectively exclusively in flow connection with the delivery and discharges passages (11-14) for the mixed gas flow or for the coolant,
- a dividing plate (16) without an orifice for the delivery passage (11a) for the mixed gas flow is disposed between two consecutive stages (I, II),
- separate devices (10, 18) for delivering oxidising gas into the first and at least one other stage (I, II) are provided,

**characterised in that**
the device for delivering the oxidising gas (18, 20, 21, 22) to the next stage (n+1, II) runs into the discharge passage (12a) for the flow of mixed gas from the preceding stage (n, I).

**2.** Apparatus as claimed in claim 1,
**characterised in that**
three stages (III) are provided, all three stages (I-III) being disposed in a common plate stack, another dividing plate (16) without an orifice (3) for the discharge passage (12b) for the mixed gas flow of the second stage (II) being provided between the second and third stage (II, III), **in that** another device (20) is provided for delivering the oxidising gas to the third stage (III) and the device for delivering the oxidising gas (18) to the third stage (III) runs into the discharge passage (11b) for the mixed gas flow of the second stage (II).

**3.** Apparatus as claimed in claim 1,
**characterised in that**
the device for delivering the oxidising gas (18) is a tubular flow distributor, which is run through the end plate (15) or through the end plate (17) and the delivery passage (12b) of the second stage (II) into the discharge passage (12) of the first stage (I), where it terminates.

**4.** Apparatus as claimed in claim 2,
**characterised in that**
the device for delivering the oxidising gas (18) is a tubular flow distributor, which is run through the end plate (15) or through the end plate (17), the discharge passage (12c) of the third stage (III), the dividing plate (16) between the second and third stage (II, III) and the delivery passage (12b) of the second stage (II) into the discharge passage (12a) of the first stage (I), where it terminates.

**5.** Apparatus as claimed in claim 2,
**characterised in that**
the device for delivering the oxidising gas (20) is a tubular flow distributor, which is run through the end plate (17) and against the flow direction of the mixed gas flow through the delivery passage (11c) of the third stage (III) into the discharge passage (11b) of the second stage (II),where it terminates.

**6.** Apparatus as claimed in claim 2,
**characterised in that**
the device for delivering the oxidising gas (20) is a tubular flow distributor, which is run through the delivery passage (11a) of the first stage (I) and the dividing plate (16) between the first and second stage (I, II) into the discharge passage (1b) of the second stage (II), where it terminates.

**7.** Apparatus as claimed in claim 1,
**characterised in that**
the device for delivering the oxidising gas (18, 20, 21) is a tubular flow distributor having outlet orifices (21.1, 21.2) which are arranged at the inlet points of the individual reaction chambers (4) in the discharge passage (11b) corresponding respectively to the height of the inflowing stream of reformate.

**8.** Apparatus as claimed in claim 7,
**characterised in that**
several outlet orifices (21.1, 21.2) are disposed radially around the flow distributor (21).

**9.** Apparatus as claimed in claim 7, **characterised in that** several outlet orifices (21.1, 21.2) are directed towards the discharge passages (12a).

**10.** Apparatus as claimed in claim 1, **characterised in that** the device for delivering the oxidising gas is a tubular, coaxial flow distributor (22), wherein an inner pipe (22.1) at the end facing the preceding stage (n) has outlet orifices (23) into an outer pipe (22.2) and the outer pipe (22.2) has outlet orifices (24) into the delivery passage of the next stage (n) at the end facing the next stage (n+1).

**11.** Apparatus as claimed in claim 11, **characterised in that** the device for delivering the oxidising gas is a tubular flow distributor (25), wherein an inner pipe (25.1) has, at the end directed towards the subsequent stage (n+1), one or more outlet orifices (25.4) into a baffle system (25.2) on which the side facing the preceding stage (n) has one or more outlet orifices (25.3) into the discharge passage (12a) of the preceding stage.

**12.** Apparatus as claimed in claim 1, **characterised in that** the oxidising gas is delivered into the region between discharge passage (12a) of the preceding stage (n) and the delivery passage (12b) of the subsequent stage (n+1), in which gas flows from the reaction chambers (4) are merged to form a main flow volume.

**Revendications**

**1.** Appareil à plusieurs étages (1) pour l'oxydation catalytique sélective de monoxyde de carbone contenu dans un courant de mélange gazeux riche en hydrogène, de mode de construction en plaques, dans lequel

- tous les étages sont compris dans un empilement de plaques commun,
- entre des plaques successives (2) est réalisée une chambre de réaction respective (4) remplie de catalyseur, ou une chambre de refroidissement respective (5) traversée par un agent réfrigérant,
- les plaques (2) présentent des ouvertures (3) pour former des canaux d'alimentation ou d'évacuation (11 à 14) pour les chambres de réaction ou de refroidissement (4, 5), et les chambres de réaction ou de refroidissement (4, 5) sont en communication d'écoulement chacune exclusivement avec les canaux d'alimentation et d'évacuation (11 à 14) pour le courant de mélange gazeux ou pour le réfrigérant,
- entre deux étages successifs (I, II) est agencée une plaque de séparation (16) sans ouverture pour le canal d'alimentation (11a) pour le courant de mélange gazeux,
- des dispositifs séparés (10, 18) sont prévus pour l'alimentation en gaz oxydant dans le premier étage et dans au moins un autre étage (I, II),

**caractérisé en ce que** le dispositif pour l'alimentation en gaz en oxydant (18, 20, 21, 22) vers le étage suivant (n+1, II) mène jusque dans le canal d'évacuation (12a) pour le courant de mélange gazeux de l'étage précédent (n, I).

**2.** Appareil selon la revendication 1, **caractérisé en ce qu'**il est prévu trois étages (III), **en ce que** tous les trois étages (I à III) sont réalisés sous la forme un empilement de plaques commun, **en ce qu'**il est prévu entre le deuxième et le troisième étage (II, III) une autre plaque de séparation (16) sans ouverture (3) pour le canal d'alimentation (12b) pour le courant de mélange gazeux du deuxième étage (II), **en ce qu'**il est prévu un autre dispositif (20) pour l'alimentation en gaz oxydant vers le troisième étage (III), et **en ce que** le dispositif pour l'alimentation en gaz oxydant (18) vers le troisième étage (III) mène jusque dans le canal d'évacuation (11b) pour le courant de mélange gazeux du deuxième étage (II).

**3.** Appareil selon la revendication 1, **caractérisé en ce que** le dispositif pour l'alimentation en gaz oxydant (18) est réalisé sous la forme d'une sonde tubulaire qui est amenée à travers la plaque d'extrémité (15) ou à travers la plaque d'extrémité (17) et à travers le canal d'alimentation (12b) du deuxième étage (II) jusque dans le canal d'évacuation (12) du premier étage (I), et qui se termine ici.

**4.** Appareil selon la revendication 2, **caractérisé en ce que** le dispositif pour l'alimentation en gaz oxydant (18) est réalisé sous la forme d'une sonde tubulaire qui est amenée à travers la plaque d'extrémité (15) ou à travers la plaque d'extrémité (17), à travers le canal d'évacuation (12c) du troisième étage (III), à travers la plaque de séparation (16) entre le deuxième et le troisième étage (II, III) et à travers le canal d'alimentation (12b) du deuxième étage (II) jusque dans le canal d'évacuation (12a) du premier étage (I), et qui se termine ici.

**5.** Appareil selon la revendication 2, **caractérisé en ce que** le dispositif pour l'alimentation en gaz oxydant (20) est réalisé sous la forme d'une sonde tubulaire qui est amenée à travers la plaque d'extrémité (17) et en sens opposé à la direction d'écoulement du courant de mélange gazeux à travers le canal d'alimentation (11c) du troisième étage (III) jusque dans le canal d'évacuation (11b) du deuxième étage (II), et qui se termine ici.

6. Appareil selon la revendication 2, **caractérisé en ce que** le dispositif pour l'alimentation en gaz oxydant (20) est réalisé sous la forme d'une sonde tubulaire qui est amenée à travers le canal d'alimentation (11a) du premier étage (I) et à travers la plaque de séparation (16) entre le premier et le deuxième étage (I, II) jusque dans le canal d'évacuation (11b) du deuxième étage (II), et qui se termine ici.

7. Appareil selon la revendication 1, **caractérisé en ce que** le dispositif pour l'alimentation en gaz oxydant (18, 20, 21) est réalisé sous la forme d'une sonde tubulaire qui présente des ouvertures de sortie (21.1, 21.2) qui sont ménagées aux emplacements d'entrée des chambres de réaction individuelles (4) dans le canal d'évacuation (11b), respectivement en correspondance à la hauteur du courant de reformage affluant.

8. Appareil selon la revendication 7, **caractérisé en ce que** plusieurs ouvertures de sortie (21.1, 21.2) sont ménagées radialement autour de la sonde (21).

9. Appareil selon la revendication 7, **caractérisé en ce que** plusieurs ouvertures de sortie (21.1, 21.2) sont tournées vers les canaux d'évacuation (12a).

10. Appareil selon la revendication 1, **caractérisé en ce que** le dispositif pour l'alimentation en gaz oxydant est réalisé sous la forme d'une sonde tubulaire coaxiale (22), un tube intérieur (22.1) présentant, à l'extrémité tournée vers l'étage précédent (n), des ouvertures de sortie (23) vers un tube extérieur (22.2), et le tube extérieur (22.2) présente, sur le côté tourné vers l'étage suivant (n+1), des ouvertures de sortie (24) vers le canal d'alimentation de l'étage suivant (n).

11. Appareil selon la revendication 1, **caractérisé en ce que** le dispositif pour l'alimentation en gaz oxydant est réalisé sous la forme d'une sonde tubulaire (25), un tube intérieur (25.1) présentant, à l'extrémité tournée vers l'étage suivant (n+1), une ou plusieurs ouvertures de sortie (25.4) vers un dispositif de renvoi (25.2), et sur le côté tourné vers l'étage précédent (n), une ou plusieurs ouvertures de sortie (25.3) vers le canal d'évacuation (12a) de l'étage précédent (n).

12. Appareil selon la revendication 1, **caractérisé en ce que** le gaz oxydant est amené dans la zone entre le canal d'évacuation (12a) de l'étage précédent (n) et le canal d'alimentation (12b) de l'étage suivant (n+1), zone dans laquelle les courants gazeux provenant des chambres de réaction (4) sont réunis en un courant volumique d'ensemble.

Kühlmedium
ein

1

13

12    2    14

11

5

6    3

2

7

A

6

4

B    3    7    B

2

3

A

5

3    7    3

3    15

6    18

O₂

10

O₂

FIG.1

Gasgemisch
ein

FIG. 2

FIG. 3

FIG. 4

FIG.5

FIG.6

FIG. 7

FIG.8